(19) **Europäisches Patentamt / European Patent Office / Office européen des brevets**

(11) **EP 4 540 588 B1**

(12) **EUROPEAN PATENT SPECIFICATION**

(45) Date of publication and mention
of the grant of the patent:
**18.03.2026 Bulletin 2026/12**

(21) Application number: **23741772.0**

(22) Date of filing: **19.06.2023**

(51) International Patent Classification (IPC):
***G01M 5/00*** (2006.01)

(52) Cooperative Patent Classification (CPC):
**G01M 5/0033; G01M 5/0083**

(86) International application number:
**PCT/IB2023/056327**

(87) International publication number:
**WO 2023/248104 (28.12.2023 Gazette 2023/52)**

(54) **METHOD AND DEVICE FOR THE IDENTIFICATION OF STRUCTURAL DAMAGES**

VERFAHREN UND VORRICHTUNG ZUR ERKENNUNG VON STRUKTURSCHÄDEN

PROCÉDÉ ET DISPOSITIF D'IDENTIFICATION DE DOMMAGES STRUCTURELS

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **20.06.2022 IT 202200012982**

(43) Date of publication of application:
**23.04.2025 Bulletin 2025/17**

(73) Proprietors:
- **De Luca, Alessandro**
  **80100 Quarto (NA) (IT)**
- **Caputo, Francesco**
  **80038 Pomigliano d'Arco (NA) (IT)**
- **Minardo, Aldo**
  **80131 Napoli (NA) (IT)**
- **Perfetto, Donato**
  **81030 Cesa (CE) (IT)**

(72) Inventors:
- **VALLIFUOCO, Raffaele**
  **80022 Arzano (NA) (IT)**
- **DE LUCA, Alessandro**
  **80100 Quarto (NA) (IT)**
- **CAPUTO, Francesco**
  **80038 Pomigliano d'Arco (NA) (IT)**
- **MINARDO, Aldo**
  **80131 Napoli (NA) (IT)**
- **PERFETTO, Donato**
  **81030 Cesa (CE) (IT)**

(74) Representative: **Pace Napoleone, Maria et al**
**De Simone & Partners S.r.l.**
**Via Giulio Caccini, 1**
**00198 Roma (IT)**

(56) References cited:
US-A1- 2005 061 076     US-A1- 2006 154 398
US-A1- 2011 040 496     US-B1- 6 252 334

## Description

### Technical field

The present invention concerns a device for the detection and the localisation of a structural damage affecting at least a portion of a structure to be inspected, and a corresponding method that makes use of the aforementioned device. Furthermore, the present invention relates to a computer software aimed to perform the steps of the method.

### State of the Art

Structural diagnostics is a field in continuous development. There are currently various techniques and methods for defining parameters that can identify the safety status of a structure. The state of safety refers to the load-bearing capacity of a structure and its resistance to external stresses, whether static or dynamic.

To assess the safety status of a structural system, in most cases the investigations are performed through visual inspections and, sometimes, supported by non-destructive testing techniques that require the disassembly of the parts. On the one hand, visual techniques are straightforward and do not imply any particular complexity, while non-destructive techniques are, on the other hand, complex and expensive in terms of time and money.

The latter methodologies are affected in fact by several limitations; their effectiveness directly depends on the experience of the operator that carries out the inspection.

For this reason, numerous alternative methodologies for structural health analysis based on more objective approaches have been proposed over the years.

For example, devices consisting of a set of sensors, e.g., piezoelectric transducers, to monitor changes in dynamics and mechanical characteristics over time are known. As a result of a structural damage, in fact, the characteristic parameters of the structure (fundamental frequencies of the structure, damping, etc.) are altered with respect to the normal operating conditions. With such a monitoring system, it is possible to provide, in a continuous way and in real time, information on the state of the structure and, eventually, to report unsafe conditions.

However, these methods are often complex and rely on the transfer of a large amount of data and information to be processed. Furthermore, these methods cannot always identify accurately the location and the size of a damage in the monitored structure. In addition, the used devices are restricted to be exclusively used for specific types of surfaces (e.g., flat surfaces) and for small areas of the structure.

Therefore, it is an object of the invention a device and a method for identifying structural damages solving part or all of the problems affecting the State of the Art. In detail, the invention concerns a flexible device that is easily adaptable to different structures to be investigated, and a method using an algorithm that allows, through the analysis of the gathered data, the localisation of damage in a specific area of the structure to be inspected, while reducing the amount of data to be transferred. Prior art documents relevant to the invention are patent documents US 2006/154398 A1, US 6 252 334 B1, US 2005/061076 A1, US 2011/040496 A1.

### Description of the invention

These purposes are achieved by a device, a method, and a computer software according to the claims at the end of this description.

In an aspect of the invention, a device is provided for detecting and locating structural damage present on at least a portion of a structure to be inspected, wherein the device comprises:
a first element applicable to the portion of the structure to be controlled and comprising a plurality of piezoelectric transducers distributed on a surface of said first element, and a second element connectable to the first element and comprising at least one microcontroller for independently processing data received from each of the plurality of piezoelectric transducers, wherein the first element is a flexible printed circuit board to be bonded in a removably way to the portion of the structure to be controlled and comprises a plurality of seats, where each piezoelectric transducer is mounted, in a removably way, within a corresponding seat.

This device can be used for near-real time monitoring of the health status of a structural system, and in particular for the detection and localisation of a structural damage. The device allows the in-situ data analysis through an algorithm implemented in the microcontroller located in the second element, reducing the amount of data to be transferred, and allowing the localisation of the damage in a specific area of the structure to be monitored. Furthermore, the device can be easily installed and stored on board the structure.

In another aspect of the invention, a method is provided for detecting and locating structural damage present on at least a portion of a structure to be inspected. The method comprises the following steps:

inserting a plurality of piezoelectric transducers within a corresponding plurality of seats present on the first element of a device;

attaching the first element to the portion of the structure to be monitored in such a way that the plurality of piezoelectric transducers come into contact with the aforementioned portion of the structure to be monitored, where each piezoelectric transducer is inserted, in a removable way, into a corresponding seat;

recording a current signal and obtaining a corresponding current data for each control path, where the control path is the path propagated by the current signal between a signal source and at least one of the transducers of the plurality of piezoelectric transducers;

comparing the current data with the reference data obtained as a result of the acquisition of a reference signal that is previously recorded for each control path on the same structure to be controlled; and

determining a damage index for each control path and defining a damage position map to assess the presence, the severity, and the location of a structural damage along, or in the vicinity of, that path as a result of the comparison between the current data and the reference data sets.

In particular, the method is applicable using the device according to the first aspect. Through this method, it is possible to extract the key features of the signals recorded for each control path and assess the presence, the severity (size), and the location of structural damage along, or in the vicinity of, the aforementioned path. The current signals are processed against the corresponding reference signals, allowing the definition of a damage index and a damage position map. Specifically, the damage index defines an estimation of the closest control path to the damage and the location map defines the area and size of localised damage.

In a further aspect of the invention, a computer software program is provided, performing the steps of the method described herein. Specifically, a computer software is provided consisting of computer-readable instructions that, when executed on a computer, allow the computer to run the method described herein. Specifically, this refers to a computer software product. It can be noticed that the algorithm, i.e., the computer software, is installed directly in the device's microcontroller. The method can therefore be executed remotely via pc, tablet, smartphone.

These and other aspects of the present invention will become clearer in light of the following description of some preferred forms of realisation.

Fig. 1A-B show a schematic representation of the device and the placement of a transducer inside its seat according to an example.

Fig. 2A-B show a schematic representation of the second element according to an example.

Fig. 3 shows a schematic representation of the first element according to an example.

Fig. 4A-B show a flow chart of the method according to an example and a schematic representation of two steps of the method.

Fig. 5 shows a flow chart of the algorithm application process according to an example.

Fig. 6A-B show a schematic representation of the first element and the partition of the area to be monitored into sectors according to an example.

Fig. 7A-D show a schematic representation of the first element and the identification of the damage using the ellipse drawing approach according to an example.

Fig. 8A-B show a schematic representation of the first element partitioned into sectors for the control phase of the method according to an example.

Fig. 9A-D show a schematic representation of the damage position map according to an example.

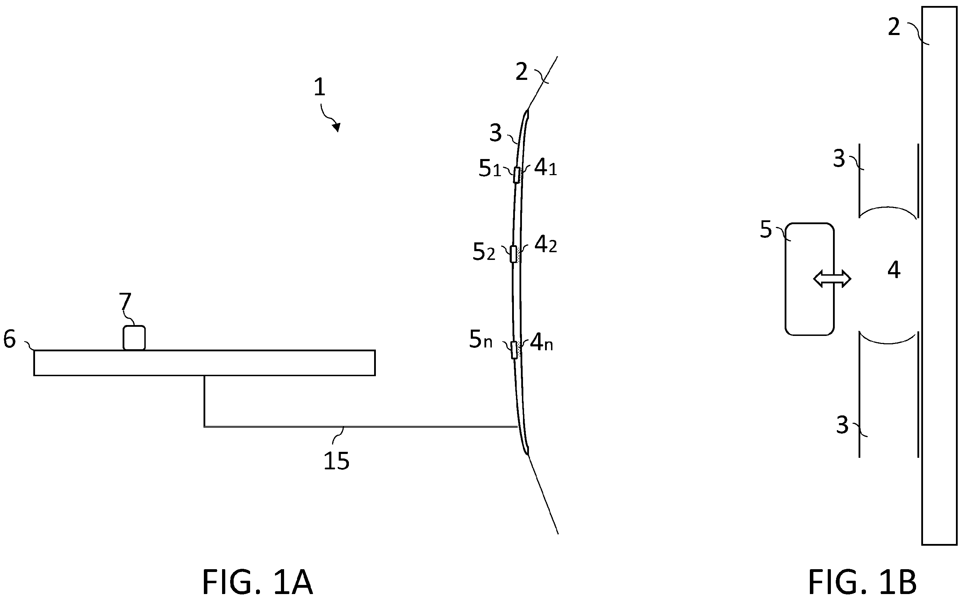

Figure 1A shows a schematic representation of the device 1 according to the present description. The device 1 comprises a first element 3 and a second element 6 connected to the first element 3 through at least one connector cable 15. The first element 3 comprises a plurality of seats $4_1$, $4_2$,...,$4_n$ which are configured to accommodate a plurality of transducers piezoelectric $5_1$, $5_2$,...,$5_n$. For the sake of simplicity and graphical needs, figure 1A shows only three seats $4_1$, $4_2$,...,$4_n$ and three piezoelectric transducers $5_1$, $5_2$,...,$5_n$ inserted in the corresponding seats. However, as it will be shown later in the description, the number of piezoelectric transducers and seats can be greater and variable.

The first element 3 is a flexible printed circuit which can fit the concavity of various surfaces on which it is applied. Figure 1A shows how the first element 3 can be easily applied to a curved portion of a structure to be monitored 2. The application of the first element 3 to the portion of the structure to be monitored 2 allows each piezoelectric transducer $5_1$, $5_2$,...,$5_n$ to come in contact (directly or indirectly through an interposed element) with said portion of the structure to be controlled 2. The second element 6 comprises, among other things, a microcontroller 7 that processes the data received from each piezoelectric transducer $5_1$, $5_2$,..., $5_n$. The microcontroller 7 is configured to process the data received from several transducers independently of each other. According to an example, the microcontroller 7 of the second element 6 is configured to process the data supplied by the piezoelectric transducers $5_1$, $5_2$,...,$5_n$ and to calculate a damage index 9.

Figure 1B schematically shows the insertion of a generic piezoelectric transducer 5 inside a corresponding seat 4. It is noted that at least one seat 4 of the plurality of seats $4_1$, $4_2$,..., $4_n$ is a through hole. This way, a region of the piezoelectric transducer 5, once inserted in the seat 4, can come into contact with the portion of the structure to be controlled. The through hole representing the seat 4 therefore comprises a first opening (front opening) on a surface of the first element 3, and a second opening (rear opening) on the opposite surface of the first element 3. The first opening can have the same size or a different size than the second opening. For example, the first opening may be larger in size than the second opening. The dimensions of the first opening must allow the piezoelectric transducer 5 to be inserted inside the seat 4. The piezoelectric transducer 5 can advantageously be inserted inside the corresponding seat 4 and fixed to the first element by means of an interlocking system. Therefore, the size of the first opening can be slightly smaller than the size of the piezoelectric transducer 5 so that, once inserted into the seat 4, the piezoelectric transducer 5 remains in position inside the seat 4. The insertion of the piezoelectric transducer 5 inside the seat 4 can advantageously be facilitated by the flexible nature of the material of the first element 3. Of course, the piezoelectric transducer 5 can be inserted into the seat 4 and then fixed to the first element 3 using alternative methods, for example through one or more locking/unlocking elements based on hook systems, adhesives, etc. Furthermore, the piezoelectric transducer 5 can be fixed into the seat 4 by welding means. The seats allow a repeatable equipment of the piezoelectric transducers 5 on the structure to be monitored 2.

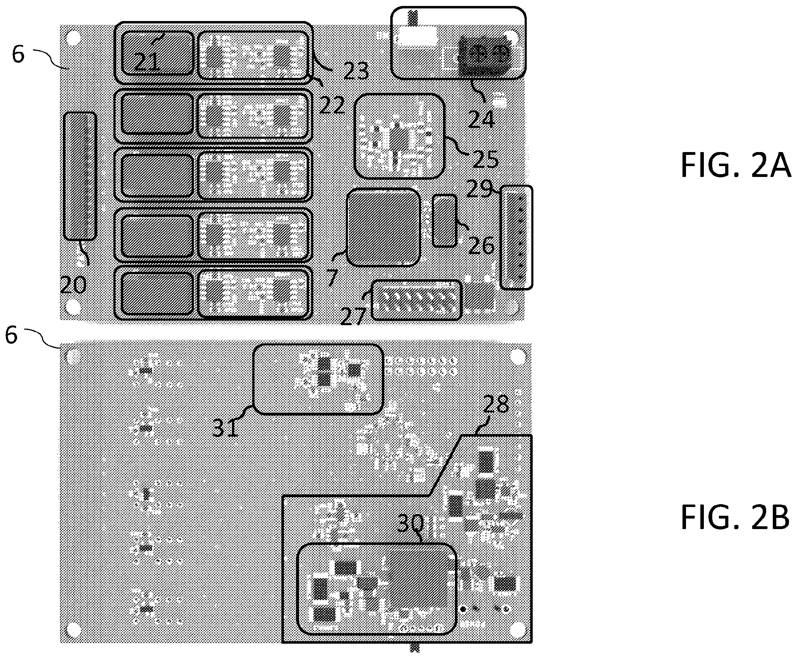

According to an example, the second element 6 is an electronic board on which there are a plurality of electronic components, as shown in figures 2A and 2B. Specifically, these two figures show the two faces of the second element 6, for example the upper face (Fig. 2A) and the lower one (Fig. 2B). This electronic board is directly connected to the first element 3 via a connector cable 15 and it is configured to transmit the excitation signals as well as to receive the signals of the piezoelectric transducers $5_1$, $5_2$,...,$5_n$, and to process the corresponding data to determine any damage index. As previously mentioned, for this purpose the second element 6 comprises at least one microcontroller 7, for example the TMS320F28379D. On the upper face, the electronic card comprises a ZIF connector 20 for the connection with the first element 3, a plurality of modules for conditioning the signals 23 (in figure 2A five modules of this type are shown) each comprising a DPDT (double double contact pole) relay 21, for example the EC2-5NU, and a dual stage amplifier 22 for conditioning the received signal, for example the OPA337. Furthermore, the electronic card comprises a power supply input 24, a power amplifier 25 for conditioning the transmitted signal, for example the ALM2403-Q1, a quartz oscillator 26 connected to the microcontroller 7, a JTAG interface (Joint Test Action Group) 27 and a Bluetooth module (Low Energy - LE type) 29. On the lower face, the electronic board comprises a primary DC-DC converter 30, for example the SEPIC LT8580EMS8E, a plurality of DC-DC voltage converters 28 for the remaining operations and a voltage reference 31 for the ADC converters, for example the REF5030IDGKT.

Essentially, the hardware of the second element (electronic board) 6 is divided into three sections:

- a wireless communication and management unit;

- an analog signal conditioning unit; and

- power management circuits.

Wireless communication and management unit

The management unit is the heart of the system and essentially consists of the microcontroller 7. Its tasks are the generation and acquisition of the signals of the plurality of piezoelectric transducers $5_1$, $5_2$,...,$5_n$, the management of the excitation sequence of the piezoelectric transducers $5_1$, $5_2$,..., $5_n$, the signal processing for damage localization, and the management of the wireless communication.

An algorithm, written for example in C language, is implemented in the microcontroller 5, capable of processing in-situ the received signals in order to calculate the position of the damage affecting the structure 2. The estimated position of the damage can be transferred via wireless to a control unit (tablet, smartphone, computer) in the form of an image and/or geometric coordinates. The acquisition and transmission of the signals take place through the ADC and DAC conversion units. Each $5_1$, $5_2$,...,$5_n$ piezoelectric transducer is connected to the dedicated ADC converter for simultaneous signal conversion, up to a maximum of four $5_1$, $5_2$,...,$5_n$ piezoelectric transducers per acquisition. The converters are equipped with dedicated voltage reference circuits 31 for generating the reference voltage used in the analog-to-digital conversion of signals. Two DAC converters are used for generating the excitation signal. As highlighted further on in the description, there is no limit in the number of piezoelectric transducers $5_1$, $5_2$,..., $5_n$ that can operate simultaneously as transmitters. The operation as transmitter or receiver of each piezoelectric transducer $5_1$, $5_2$,...,$5_n$ is controlled by the microcontroller 7 through the electromechanical relays DPDT 21, which are part of the analog signal conditioning section. The wireless communication is also controlled by the microcontroller 7 and it makes use of the Bluetooth Low Energy module 29, for example the Adafruit 4076. Through a terminal equipped with Bluetooth interface (computer/smartphone/tablet), it is possible to control the device 1 and receive information, textual and graphical, concerning the location of the damage. Specifically, the low-energy Bluetooth device 29 is used both for the transmission of data processed by the microcontroller 7 and for the activation and deactivation of the device 1 aimed at monitoring the structure to be controlled 2.

Analog signal conditioning unit

Analog signal conditioning deals with conditioning the signals of the plurality of piezoelectric transducers $5_1$, $5_2$,...,$5_n$, both in transmission and in reception. The transmission section consists of the inverting power amplifier 25 based on operational amplifier technology. The amplifier 25 receives at its input the signals coming from the DAC converters of the microcontroller 7 and amplifies them to a voltage sufficient for the correct functioning of the system.

The receiving section, on the other hand, consists of a two amplification stages. A first amplifier, called charge amplifier, has a low input impedance, and it is connected directly with the transducer. It converts current to voltage, amplifies, and filter the signal. The second amplifier is a non-inverting amplifier acting as a bandpass filter. Its purpose is to further amplify and filter the signal, by decoupling the first stage from the microcontroller's ADC converter. Both stages are built using operational amplifier technology and are based on the 22 amplifier.

Each receiver is equipped with an independent module 23 for conditioning the received signal, while the power amplifier 25 is unique. The connection of the piezoelectric transducer $5_1$, $5_2$,...,$5_n$ to the reception or transmission conditioning takes place via the DPDT electromechanical relay 21, controlled by the microcontroller 7. Each piezoelectric transducer $5_1$, $5_2$,...,$5_n$ is connected to a relay 21 allowing the connection of each piezoelectric transducer $5_1$, $5_2$,...,$5_n$ to the receiver or to the transmitter conditioning circuit.

Power management circuits

The stabilization of the input voltage and the generation of the operating voltages are realized through a plurality of DC-DC converters 28, 30. The generated voltages are:

- +15 V
- +5 V
- +3.3 V
- +1.2 V

The converters used can be for example the LT8580EMS8E, TPS62162DSGT, TPS62080ADSGT, LMR62421XMFE. These are buck, boost and SEPIC type DC-DC converters. The last one is the primary converter 30 and it allows supplying the card with a dc voltage in the range 3-30 V, providing a stable 15 V output voltage over the whole operating range. This allows the system to be supplied using various energy sources, such as photovoltaic panels, batteries and harvesting.

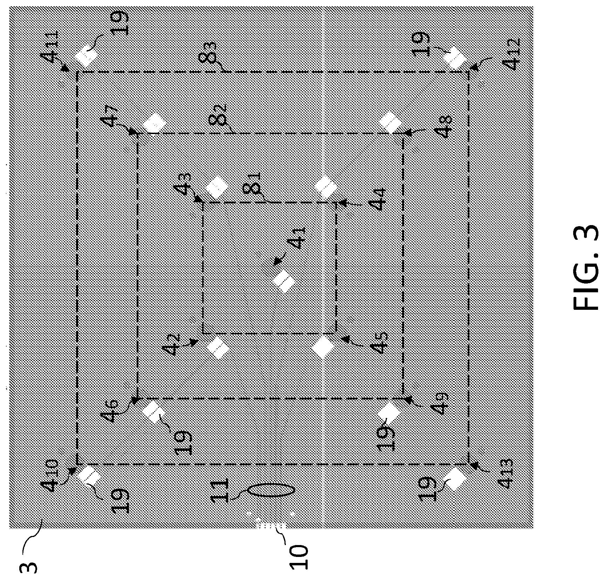

Figure 3 shows in detail the first element 3 or patch or printed circuit. This element is made of a flexible material such as plastic, in particular polyimide (PI), so that it can be fitted to non-flat surfaces. It is noteworthy that the first element 3 has a square shape. However, the first element 3 can also assume other polygonal or circular shapes.

According to an example, the seats ($4_1$, $4_2$,...,$4_n$) are arranged on one of the surfaces of the first element (3) so as to form a plurality of subgroups of seats $8_1$, $8_2$,...,$8_n$, wherein in each subgroup the seats $4_1$, $4_2$,...,$4_n$ are distributed along a closed path, in particular at the vertices of a polygonal shape. For example, Figure 3 shows three subgroups of seats $8_1$, $8_2$, $8_3$ where the seats $4_1$, $4_2$,...,$4_n$ are distributed along square paths. It is noted that the seats can be distributed along different polygonal paths, such as triangular, pentagonal, hexagonal paths, etc. Alternatively, the paths can be circular or elliptical. Furthermore, in an alternative configuration, the subgroups of seats $8_1$, $8_2$,...,$8_n$ can have different shapes from each other.

In particular, the closed paths defined by the arrangement of the seats $4_1$, $4_2$,...,$4_n$ included in each subgroup are concentric with each other. For example, Figure 3 shows three square paths of different sizes all having the same centre (defined by a central seat $4_1$). Specifically, the first subgroup $8_1$ is included within the second subgroup $8_2$ which in turn is included within the third subgroup $8_3$. For example, the first subgroup $8_1$ can define a square path of side 100 mm, the second subgroup $8_2$ can define a square path of side 200 mm, and the third subgroup $8_3$ can define a square path of side 300 mm.

According to an example, only one subgroup of the plurality of subgroups of seats $8_1$, $8_2$,...,$8_n$ is configured to accommodate piezoelectric transducers $5_1$, $5_2$,...,$5_n$. Namely, again with reference to Figure 3, piezoelectric transducers

$5_1, 5_2,...,5_n$ can only be inserted into the seats of the first subgroup $8_1$, the second subgroup $8_2$ or the third subgroup $8_3$. It should be noted that for each subgroup configuration, a piezoelectric transducer is always inserted into the central seat $4_1$ positioned at the centre of the first element 3.

For example, the first element 3 can include at least five seats $4_1, 4_2,...,4_5$, in which four locations $4_2, 4_3, 4_4, 4_5$ are arranged at the vertices of a square shape forming a subgroup of locations, and the fifth seat $4_1$ is arranged at the centre of the same square shape. In this case, five piezoelectric transducers $5_1, 5_2,...,5_5$ can be inserted into each of the five seats $4_1, 4_2,...,4_5$.

In another example, the first element 3 includes at least nine seats $4_1, 4_2,...,4_9$, in which four seats $4_2, 4_3, 4_4, 4_5$ are arranged at the vertices of a first square shape forming a first subgroup of seats $8_1$, other four seats $4_6, 4_7, 4_8, 4_9$ are arranged at the vertices of a second square shape forming a second subgroup of seats $8_2$, and the fifth seat 41 is arranged at the centre of both first and second square shapes. In this case, five piezoelectric transducers $5_1, 5_2,...,5_5$ can be inserted into the first subgroup of seats $8_1$ and into the fifth seat $4_1$, or into the second subgroup $8_2$ and always into the fifth seat $4_1$. The perimeter defined by the first subgroup of seats $8_1$ can be completely contained within the perimeter defined by the second subgroup of seats $8_2$.

In a further example, the first element 3 includes at least thirteen seats $4_1, 4_2,...4_{13}$, wherein four seats $4_2, 4_3, 4_4, 4_5$ are arranged at the vertices of a first square shape forming a first subgroup of seats $8_1$, other four seats $4_6, 4_7, 4_8, 4_9$ are arranged at the vertices of a second square shape forming a second subgroup of seats $8_2$, other four seats $4_{10}, 4_{11}, 4_{12}, 4_{13}$ are arranged at the vertices of a third square shape forming a third subgroup of seats $8_3$, and the fifth seat $4_1$ is located at the centre of the first, second, and third square shape. In this case, five piezoelectric transducers $5_1, 5_2,...,5_5$ can be inserted into the first subgroup of seats $8_1$ and into the fifth seat $4_1$, or into the second subgroup $8_2$ and into the same fifth seat $4_1$, or into the third subgroup $8_3$ and into the same fifth seat $4_1$. The perimeter defined by the first subgroup of seats $8_1$ can be completely contained within the perimeter defined by the second subgroup of seats $8_2$, and the perimeter defined by the second subgroup of seats $8_2$ can in turn be completely contained within the perimeter defined by the third subgroup of seats $8_3$.

The insertion of piezoelectric transducers $5_1, 5_2,...,5_5$ in a subgroup of seats or in another subgroup of seats makes it possible to vary the size of the region of the structure 2 intended to be monitored. Indeed, to analyse a region of a certain size, it can be decided to place the piezoelectric transducers $5_1, 5_2,...,5_3$ in the first subgroup $8_1$. To analyse a region with larger dimensions, it can be decided to place the piezoelectric transducers $5_1, 5_2,..., 5_3$ in the second subgroup $8_2$ or in the third subgroup $8_3$. Figure 3 shows only three subgroups of seats $8_1, 8_2, 8_3$. However, it is evident that the first element may include a larger number of subgroups of seats $8_1, 8_2,...8_n$ allowing for more flexibility in searching for the most appropriate size of the region intended to be analysed.

According to one example, the surface of the first element 3 is at least partially trimmable to reduce the size of the first element 3 based on the arrangement of the piezoelectric transducers $5_1, 5_2,...5_n$ on that very surface. Namely, in the event that it is decided to limit the arrangement of the piezoelectric transducers $5_1, 5_2,...5_n$ to only the first subgroup of seats $8_1$, i.e., the one closest to the centre of the first element 3 or the one characterised by the smallest path defined by the seats, it is possible to accordingly trim the surface of the first element 3 so as to preserve only the seats of the first subgroup $8_1$ and eliminate the unused seats of the other subgroups. Depending on the application, the distribution of piezoelectric transducers $5_1, 5_2,...5_n$ can be customized by integrating their number.

According to an example, each seat of the plurality of seats $4_1, 4_2,...4_n$ is connected to a connection terminal 10 via a printed cable 11. Furthermore, at each seat $4_1, 4_2,...4_n$ there is a contact plate 19 connected to the printed cable 11 that allows the electrical connection between the same printed cable 11 and the piezoelectric transducer inserted in that very seat. It can be noted that the printed cable 11 connects the contact plates 19 of the seats located at the same positions along the closed path of the various subgroups $8_1, 8_2, 8_3$. Namely, the same printed cable 11 connects all the contact plates 19 of the seats located at the top right vertex of the square path, or all the contact plates 19 of the seats located at the top left vertex, bottom right or bottom left. Instead, the printed cable 11 that connects the contact plate 3 of the seat located at the centre of the first element 3 is independent on the other printed cables 11. All printed cables 11 converge into the connection terminal 10. In this way, it is possible to trim the first element 3, as previously mentioned, without however interrupting the electrical contacts of a specific subgroups of seats $8_4, 8_2, 8_3$.

Figure 3 shows the presence of a plurality of additional holes 32 at each seat $4_1, 4_2,...4_n$. These additional holes 32 permit the insertion of a dedicated tool to facilitate detachment of the piezoelectric transducers $5_1, 5_2,...5_n$ from the structure to be monitored 2.

If the first element is supported by a removable adhesive for bonding the piezoelectric transducers $5_1, 5_2,...5_n$ to the structure to be monitored 2, it is possible to remove and subsequently replace the plurality of piezoelectric transducers $5_1, 5_2,...5_n$, while maintaining the distance between the piezoelectric transducers $5_1, 5_2,...5_n$ and enabling their reuse.

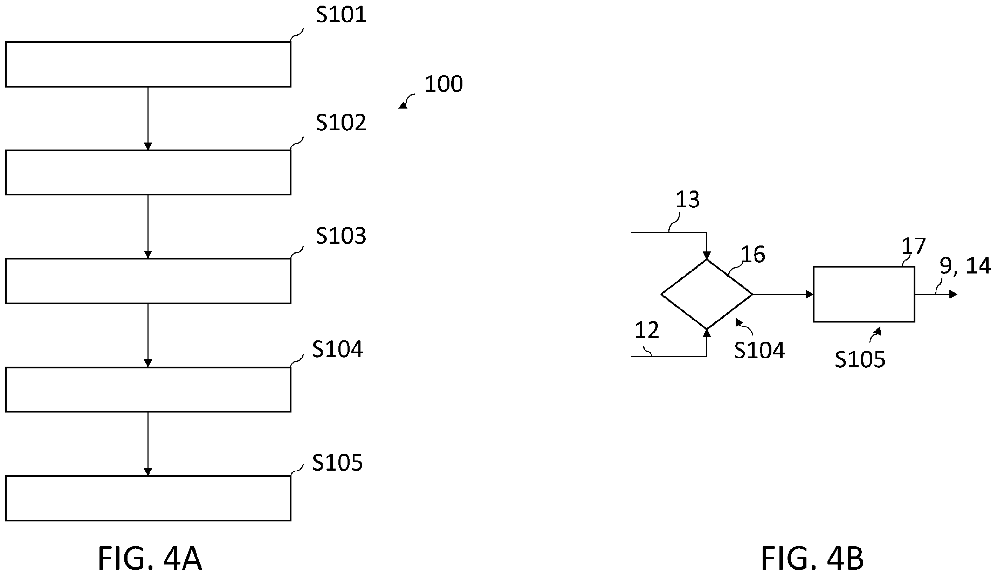

Figure 4A shows a flowchart of the method 100 for the detection and the localisation of a structural damage present on at least a portion of the structure to be monitored 2 according to an example. The method 100 is applicable using the device 1 previously described.

The method 100 initially involves the insertion of the piezoelectric transducers $5_1, 5_2,...5_n$ within the seats $4_1$,

$4_2,...4_n$ present on the first element 3 of the device 1 (step S101). In particular, upon selecting the number of piezoelectric transducers $5_1, 5_2,...5_n$ to be used, these are inserted within the corresponding seats $4_1, 4_2,...4_n$. As previously described, the number of available seats $4_1, 4_2,...4_n$ is generally greater than the number of the used piezoelectric transducers $5_1, 5_2,...5_n$. For example, 5 piezoelectric transducers $5_1, 5_2,...5_n$ can be used, that can be inserted within five corresponding seats out of thirteen available seats $4_1, 4_2,...4_n$. The choice of the to be used seats $4_1, 4_2,...4_n$ for inserting the piezoelectric transducers $5_1, 5_2,...5_n$ essentially depends on the size of the region intended to be monitored of the whole structure 2 to be investigated, as previously described.

Subsequently, in step S102, the method involves the application of the first element 3 on the portion of the structure to be controlled 2 so that the plurality of piezoelectric transducers $5_1, 5_2,...5_n$ comes into contact with that portion of the structure to be controlled 2. Once the first element 3 is applied, the method 100 includes the acquisition of a current signal 12 and the reception of a corresponding current datum for each control path. The control path may be defined as the path taken by the current signal between a signal source and at least one of the transducers of the plurality of piezoelectric transducers $5_1, 5_2,...5_n$ (step S103). Advantageously, each piezoelectric transducer $5_1, 5_2,...5_n$ is removably insertable within a corresponding seat $4_1, 4_2,...4_n$, resulting in a kind of modularity of the device 1 and flexibility in the application of the method, as the control path can be different depending on the position of the piezoelectric transducer $5_1, 5_2,...5_n$ within a certain seat $4_1, 4_2,...4_n$.

Furthermore, the method 100 involves the step S104 dedicated to the comparison between the current datum and a reference datum obtained after the acquisition of a reference signal 13 previously carried out for each control path on the same structure to be controlled 2. Thus, the method 100 comprises the determination of a damage index 9 for each control path, and the definition of a damage position map 14 to assess the presence, the extent, and the location of structural damage along, or in the vicinity of, that path following the comparison between the current data and the reference data (step S105).

The data comparison step along with the determination of damage index 9 and map 14 are schematically represented in detail in Figure 4B. Specifically, the current signal 12 and the reference signal 13 are compared (S104) in a comparison module 16. Based on the result of the comparison, for example whether these two signals are similar to each other or very different from each other, a calculation module 17 processes the information data originating from the comparison module 16 to determine a damage index 9 and possibly also a damage position map 14 (S105).

According to an example, the method 100 comprises generating guided elastic Lamb waves propagating through the structure to be controlled 2 by means of the plurality of piezoelectric transducers $5_1, 5_2,...5_n$ and automatically extracting the wave modes of the Lamb waves, in particular the group velocity of the symmetrical mode S0 of the Lamb wave, to determine the damage index 4 and define the damage position map 14.

In particular, according to an example, a first transducer $5_1$ of the plurality of piezoelectric transducers $5_1, 5_2,...5_n$ can act as a signal generator, and each of the remaining piezoelectric transducers $5_2,...5_n$ can act as a signal sensor. In this case, in turn each one of the plurality of transducers $5_1, 5_2,...5_n$ acting as a signal source generates the same current signal 12 which is subsequently received by all of the remaining piezoelectric transducers $5_2,...5_n$ acting as signal sensors.

Alternatively, an external source can act as a signal generator and each of the piezoelectric transducers $5_1, 5_2,...5_n$ can act as a signal sensor. This means that the device 1 and the corresponding method 100 can operate under both passive and active modes. In particular, in the passive mode, the device 1 can detect elastic waves generated by impacts and accidental loading conditions.

The method 100 herein described can advantageously be used for structural integrity monitoring of a structure to be controlled 2 and can be conducted by the previously described device 1.

In practice, the first element 3, i.e., the smart patch or printed circuit board, is applied to a portion of the structure to be monitored 2. As previously described, the piezoelectric transducers $5_1, 5_2,...5_n$ can be used as both actuators and receivers. The flexibility of the first element 3 allows for the monitoring of structures of different geometries. An input signal can be sent to the microcontroller 7 connected to the Bluetooth module 29 of the device 1 by an external device (computer/tablet/smartphone) via an interface (computer/tablet/smartphone application). The signals of the piezoelectric transducers $5_1, 5_2,...5_n$ are acquired in an interchangeable manner (i.e., with round robin sequencing), covering all possible actuator-sensor monitoring paths (control paths).

For each analysed path, any of the piezoelectric transducers $5_1, 5_2,...5_n$ can act as an actuator, driven by a DAC (Digital-to-Analog Converter) channel of the microcontroller 7, while all the other piezoelectric transducers $5_1, 5_2,...5_n$ can act as receiver sensors, whose outputs are acquired through an equal number of dedicated ADC (Analog-to-Digital Converter) channels of the microcontroller 7 in order to obtain the maximum sampling frequency. For each actuator-sensor path, upon activation of device 1, a reference signal 13, representative of the configuration of the structure considered to be damage-free, is acquired and stored. The set of reference signals 13 is designated as the 'reference data set'. The set of signals recorded during the operational life of the structure (current signals 12) is referred to as the 'current data set'. The current data set, which could contain certain features of the signal associated with the damage, and the reference data set are processed and compared in-situ by the microcontroller 7. The processing may reveal information about the position and the extent of the damage. In particular, the device 1 can identify/extract the modes of the Lamb waves of interest and determine their time of arrival (flight). The identification of the time of flight of the S0 and A0 modes of the signals is conducted through the extraction of their peaks, evaluating the signal energy distribution. For each actuator-receiver path, the microcontroller 7 calculates a damage index 9 by comparing the reference signals 13 and the actual signals 12. The comparison is performed for the entire data set. The higher the value of damage index 9, the greater the influence of the damage on the specific path. In addition, the microcontroller 7 provides a damage probability map 14, where the larger the probability value, the greater the damage probability. By further processing the acquired data, information on the location and the extent of the damage can be derived. This permits the operators to restrict the maintenance procedures to only those areas flagged by the device 1, reducing the inspection/repair costs. Processed data and information are sent to a control unit via the wireless communication module 29. Results can be reviewed by operators via a computer/tablet/smartphone application with a user-friendly interface. In particular, signals and graphical representations of damage dimensions and positioning can be transferred to the user.

The primary power converter 30 allows the device 1 to be powered over a wide range of DC voltages, while the low power consumption allows the use of batteries as power sources.

The device 1 is lighter in weight and easier to install than conventional wired solutions. In fact, cables are minimised, being replaced by extremely lightweight circuits/printed conductor wires.

The flexibility of the first element 3 allows it to be adapted to any surface (flat, stiffened, curved, etc.).

The conductive wires can be of any shape (curved or straight), so they are suitable for any complex geometry and can be easily scaled.

The device 1 also consists of a microcontroller 7 integrated with a wireless transceiver 29. Data is therefore locally processed, so that only the final information on the position and on the extent of the damage is transmitted to the user. This overcomes the limited bandwidth in wireless sensor interrogation, and it reduces the power consumption due to the smaller amount of data to be transmitted wirelessly.

The signals are recorded in a pitch-catch approach when the device is in active mode.

The system can work at different excitation frequencies (typical of the non-destructive inspection range) and data transmission lasts less than 30 seconds.

As highlighted, the microcontroller 7 enables the in-situ data processing for the detection and localisation of damage.

The first element 3 has a uniform and repeatable bonding quality and can be used to effectively monitor structures made of different materials. The first element 3 can be easily removed, without damaging the underlying surface, in the event of repairs to the monitored structure.

Information on the size and location of the damage can be transferred to the user via an easy, user-friendly graphical representation, and multiple damages can be detected simultaneously.

As mentioned earlier, the device 1 can be used as both an active and passive monitoring system. This means that when the guided waves are not excited (passive mode), the device 1 detects the impact event and sends a notification to the operator's control unit.

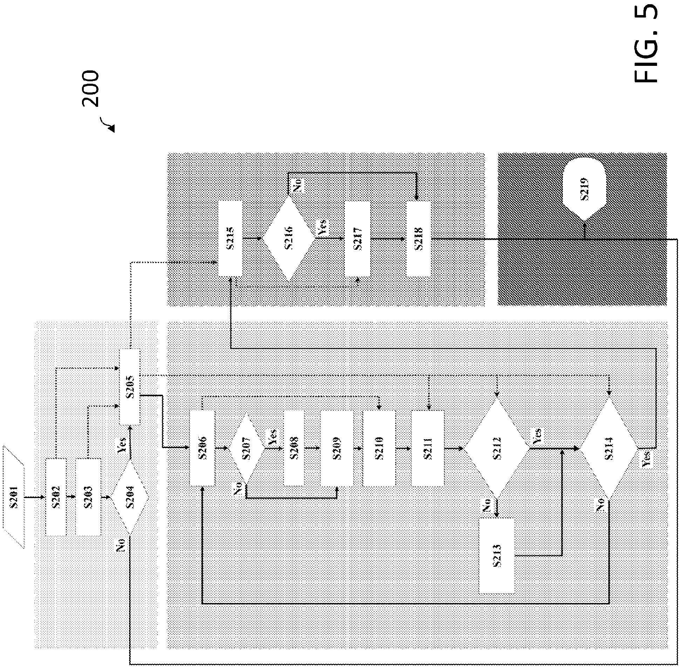

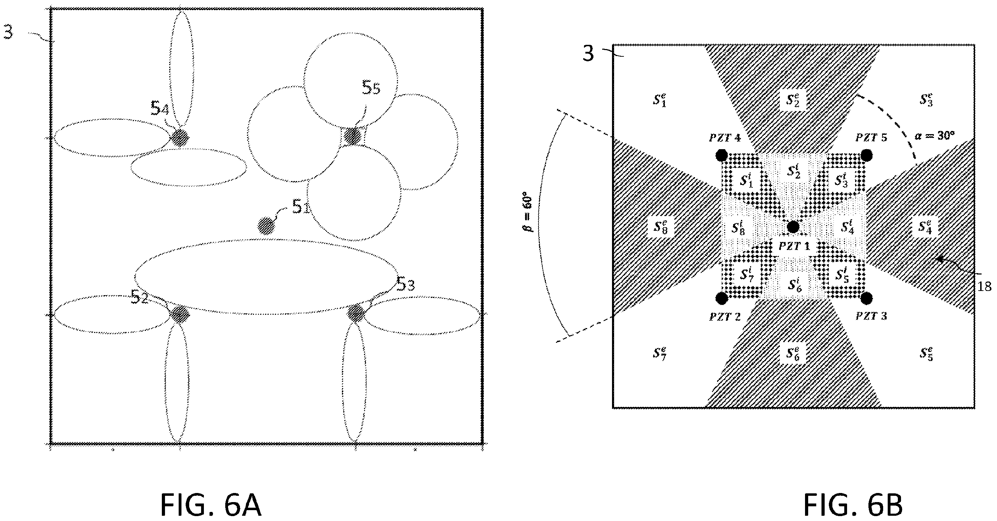

Figure 5 illustrates a flow chart of the algorithm application process 200. The details of the algorithm process are described in detail hereafter with reference to Figures 6A-9D.

The algorithm enables the localisation of the damage starting from the comparison of two data sets, one related to acquisitions of current signals 12 made in the current state, and one related to reference signal 13 acquisitions performed when the structure is intact. These acquisitions are carried out by a network of five piezoelectric transducers $5_1, 5_2, ... 5_5$ arranged as shown in figure 6A, i.e., four transducers $5_2, 5_3, ... 5_5$ are arranged so as to form a square of dimensions chosen by the user and the fifth transducer $5_1$ is placed at the centre of that square. It is noted that the arrangement of figure 6A can be, for instance, the configuration in which four transducers $5_2, 5_3, ... 5_5$ are arranged at the vertices of the square of the subgroup 82. Depending on the need, a different subgroup can however be selected.

In turn, each of these piezoelectric transducers 51, 52, ... 55 actuates the same signal while the other four receive it. In total, twenty signals are gathered.

In conclusion, the algorithm needs the following inputs to work:

- details of the actuation signal (frequency and number of cycles) ;

- details of the arrangement of the piezoelectric transducers $5_1, 5_2, ... 5_5$ (planar coordinates of the central transducer 51 and measurement of the distance between the central transducer 51 and any other transducer 52, 53, ... 55. These coordinates may be relative to a reference system having as its origin the bottom left corner of the first element 3);

- the planar dimensions of the structure to be monitored (height and width);

- the twenty signals gathered as a reference dataset (when the structure is supposed to be damage-free);

- the twenty actual recorded signals.

According to an example, the method 100 includes, as a first step, the determination of the presence and a tentative location of the structural damage within a specific damage region 18 as a function of the geometric distribution of the plurality of piezoelectric transducers $5_1$, $5_2$,...$5_n$ in contact with the portion of the structure to be monitored 2, wherein that first step occurs if the value of at least one of the damage indices 9 determined for each control path is greater than a threshold value predetermined by the analysis of the received reference signals (healthy structure).

Furthermore, the method 100 includes a second step subsequent to the first one to determine a second tentative location of structural damage by applying a multi-stage approach to one or more pairs of piezoelectric transducers selected from the plurality of piezoelectric transducers $5_1$, $5_2$,...$5_n$ in contact with the portion of the structure to be monitored 2, and to determine an estimated damage region 32 based on the damage indices 9 and the selected pairs of piezoelectric transducers.

Additionally, the method 100 includes a third step to determine a mapping of the portion of the structure to be inspected 2, and to identify the location of structural damage on that very portion, wherein the mapping is done by selecting one or more piezoelectric transducers $5_1$, $5_2$,...$5_n$ depending on the identified damage region 18, wherein the location of the piezoelectric transducers $5_1$, $5_2$,...$5_n$ is a virtual location depending on the damage region 18.

The flow chart in Figure 5 provides an overview of the algorithm, which can be decomposed into the three above-mentioned steps and detailed hereafter:

- First phase or preliminary phase (S202-S205);

- Second phase or damage position identification phase (S206-S214);

- Third phase or phase of damage position map creation 14 (S215-S218).

Phase 1. Preliminary phase

The purpose of this step is to determine the macro-area of the structure in which the possible damage is to be found. The first step is to calculate the twenty damage indices 9 of each control path.

The damage indices can be calculated as follows:

$$DI = \sqrt{\left\{ \sum_i \left( c_i(\mathrm{t}) - c_{id}(\mathrm{t}) \right)^2 \ / \ \sum_i c_i(\mathrm{t})^2 \right\}},$$

where $c_i(\mathrm{t})$ is the amplitude value of the reference signal 13 (healthy structure) at the i-th acquisition point as a function of the time, and $\boldsymbol{c_{id}(\mathrm{t})}$ is the amplitude value of the current signal 12 (damaged structure) at the i-th acquisition point as a function of time. It is intended that the signals are acquired in a sufficiently-long time interval in order to capture at least the first generated Lamb wave mode (symmetrical S0) in each control path.

This calculation must be performed for each of the twenty received signals. If any of these damage indices 9 does not exceed a certain threshold value predetermined by the analysis of the baseline received signals (healthy structure), the structure is considered undamaged, and the algorithm stops. Whenever the preset threshold is exceeded by at least one the calculated damage indices, , the algorithm will use some of these indices to identify the area in which this damage is located.

In Fig. 6B, it can be seen that the first element 3 can be partitioned into eight sectors $S_n$, with $n = 1,2...8$. Areas with odd numeration are referred to as 'diagonal' sectors, while those having even numeration are referred to as 'lateral' sectors. Each sector is further partitioned into two sub-sectors $S_n^i$ and $S_n^e$, where the superscripts i and e refer respectively to the internal and external zones of the square formed by the piezoelectric transducer network $5_1$, $5_2$,...$5_n$, referred to as PZT1, PZT2,...PZT5 in figure, respectively. Once the damaged sector is found, the algorithm checks whether the damage is external or internal to the transducer network PZT1, PZT2,...PZT5 (thus identifying the damaged sub-sector). If the damaged spot is inside the square formed by the transducer network PZT1, PZT2,...PZT5 but nearby the external zone, the algorithm may incorrectly identify the sub-sector. Therefore, later, when more information is available to the algorithm, a second check will be performed to possibly rectify this process.

Phase 2. Identification of damage location

The second phase is aimed at estimating the coordinates of the damage. Based on the damaged sector category (lateral or diagonal), identified in the first phase, the algorithm continues over the following 3 pairs of transducers PZT1, PZT2,...PZT5:

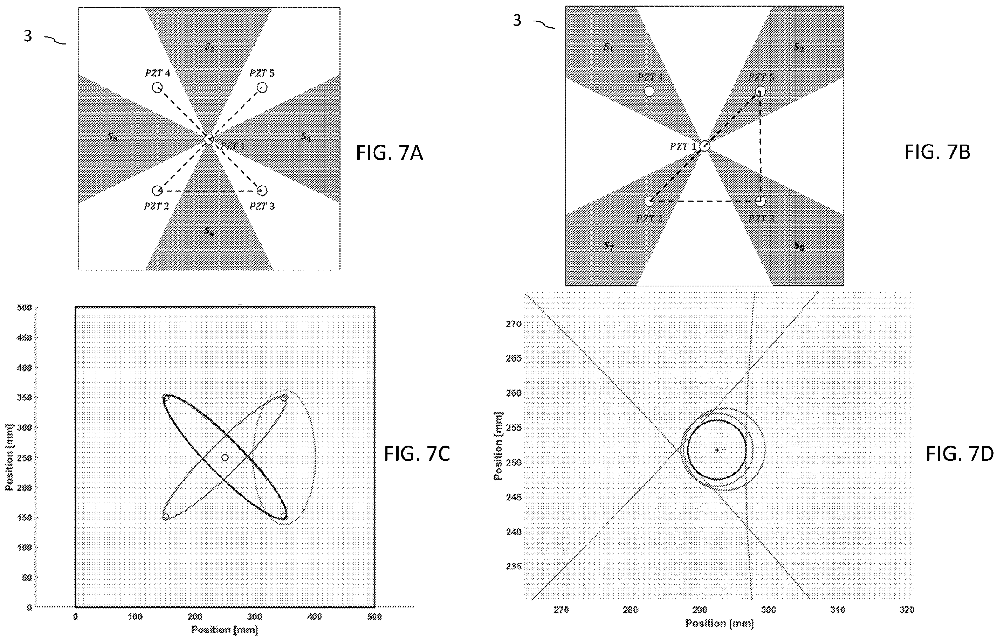

- if the damage is located in a sector $S_n$ with even n (one of the grey areas in Fig. 7A), the algorithm evaluates the two paths ($p_{2-5}$ and $p_{3-4}$) and the lateral path intersecting the reference sector. Fig. 7A shows an example where the damage is located in sector $S_6$ (the dotted lines represent the considered paths);

- if the damage is located in a sector $S_n$ with odd n (one of the grey areas in Fig. 7B), the algorithm evaluates the two side paths closest to the reference sector and the diagonal path corresponding to the opposite diagonal. Fig. 7B shows an example where the damage is located in sector $S_5$ (the dashed lines represent the considered paths).

An example of the result of this process is shown in Fig. 7C. The same transducers PZT1, PZT2,...PZT5 cause disturbances to the signal. The algorithm is able to predict these interferences to filter them out. The damage is triangulated using the ellipses approach (graphical representation). Starting from these ellipses, an iterative process is initiated to draw a circumference tangent to the three ellipses. For example, in Fig. 7D, the final circumference is identified after three cycles of the aforementioned iterative method: the outermost circle represents the first attempt circumference, the middle circle is the outcome of the second cycle, and the innermost circle represents the final circumference. The centre of the circle identified by the final circumference represents the estimated spot for the damage location. Before entering the last phase, the algorithm uses this information to perform some consistency checks on the results obtained so far. If a false outcome is encountered, corrections are made. The first check is to verify that the found coordinates lie in a position that is consistent with the sector identified in the first phase. For this purpose, a further partition of the structure into four parts is made as follows:

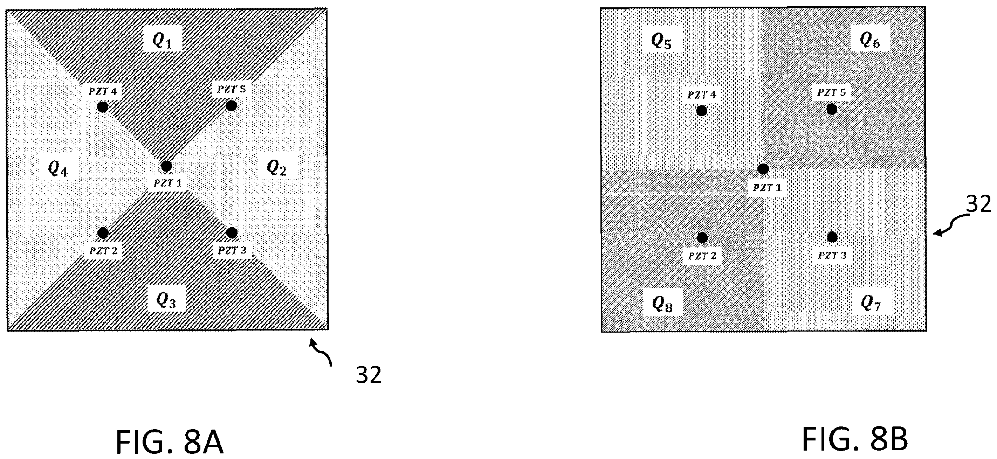

- if the damage is predicted in a lateral sector $S_n$, with **n = 2,4,6,8,** the first element 3 is partitioned into four triangular segments as shown in Fig. 8A. For example, if the sector identified in the first phase is the $S_6$ (Fig. 7A), the check is considered to be successful if the damage coordinates found in this phase lie in the region $Q_3$ (Fig. 8A);
- if the damage is predicted in a diagonal sector $S_n$, with **n = 1,3,5,7,** the first element 3 is partitioned into four quadrants as shown in Fig. 8B. For example, if the sector identified in the first phase is the $S_5$ (Fig. 7B), the check is considered to be successful if the damage coordinates found in this phase lie in the region $Q_7$ (Fig. 8B).

As far as the second check is concerned, as previously stated in the description of the first phase, the algorithm checks whether the coordinates of the damage found are truly consistent with the sub-sector identified in the first phase. It is possible, in fact, as anticipated, that the algorithm incorrectly identifies the sub-sector when the damage is inside the sensor network but close to the external area. In the case of a negative check, the algorithm returns to the iterative procedure to find a new circumference compatible with the correct sub-sector.

Phase 3. Generation of the "Damage Position Map"

The aim of this phase is to create a map 14 that provides an easy and fast visualization of the damaged area. The transducers PZT1, PZT2,...PZT5 that are involved in this phase depend on the sector identified in the first phase.

For a damage internal to the PZT1, PZT2,...PZT5 transducers network:

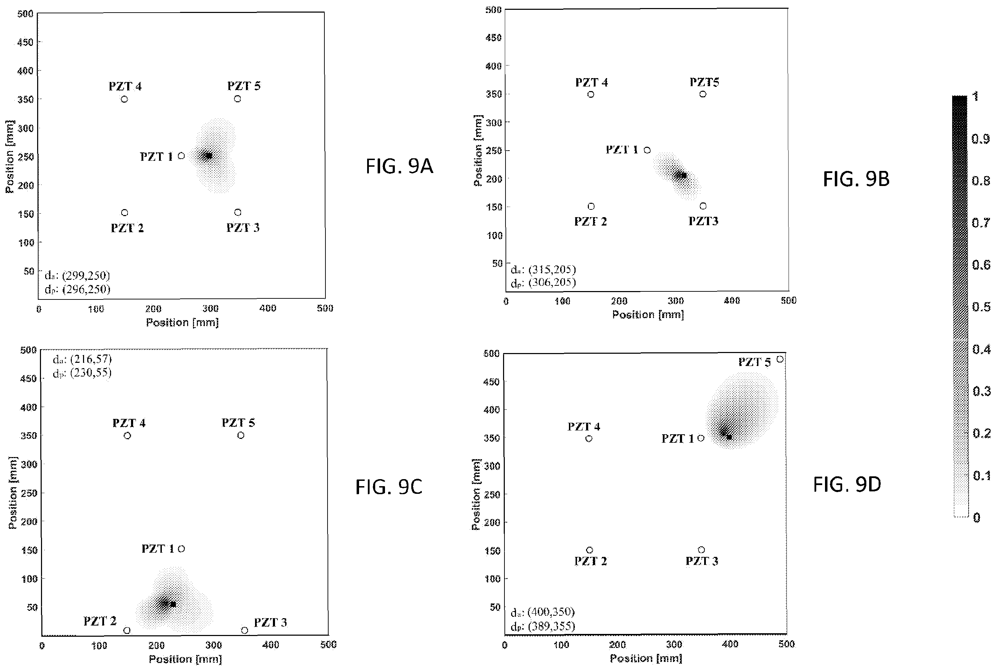

- if the damage is located in an internal lateral subsector ( $S_n^i$ , with **n = 2, 4, 6, 8),** the three transducers closest to that sector are selected. Fig. 9A illustrates an example where the damage is localised in the sector $S_4^i$ (where, "$d_a$" is representative of the coordinates of the actual damage, "$d_p$" is representative of the coordinates of the estimated damage);

- if the damage is located in an internal diagonal subsector ( $S_n^i$ , with n = 1, 3, 5, 7), the only two sensors considered will be the two that intersect the semi-diagonal of that specific sector. Fig. 9B illustrates an example where the damage is localised in the sector $S_5^i$ (where, "$d_a$" is representative of the coordinates of the actual damage, "$d_p$" is representative of the coordinates of the estimated damage).

As far as a damage external to the sensor network is concerned, in order to create a consistent map, the same transducers PZT1, PZT2,...PZT5 are considered, but envisioned in a different position:

- if the damage is located in an external lateral subsector ($S_n^e$, with n = **2, 4, 6, 8),** the position of the central transducer PZT1 is assumed to be at the midpoint of the segment joining the other two transducers PTZ2, PTZ3. Instead, the latter are moved close to the edge corresponding to the reference sector. Fig. 9C illustrates an example where the damage is localised in the subsector $S_6^e$ (where, "d$_a$" is representative of the coordinates of the actual damage, "d$_p$" is representative of the coordinates of the estimated damage);

- if the damage is located in an external diagonal subsector ($S_n^e$, with ***n* = 1, 3, 5, 7),** the central transducer PZT1 is virtually assumed to be in place of the lateral transducer PTZ5, which is instead assumed to be close to the angle corresponding to the reference sector. Fig. 9D illustrates an example where the damage is localised in the subsector $S_3^e$ (where, "d$_a$" is representative of the coordinates of the actual damage, "d$_p$" is representative of the coordinates of the estimated damage).

Once the sensors (transducers) and their virtual positions have been chosen in this phase, the algorithm exploits the additional information identified in the previous phase.

In detail, the process 200 consists of the following steps:

S201 = algorithm setup (input acquisition)
S202 = signals pre-processing
S203 = damage indices calculation (RMSD e DI)
S204 = structural integrity assessment
S205 = damaged area research and selection of the subsector containing the damage (first attempt)
S206 = selection of three specific paths surrounding the sub-sector identified in the step S205
S207 = processing of the signals recorded for the specific paths selected in the step S206 in order to detect noise S208 = signals de-noising
S209 = extraction of the signals' main characteristics
S210 = triangulation of the damage through ellipses (graphical representation)
S211 = drawing of a circumference representative of the localised damage (graphical representation)
S212 = consistency check between the subsector selected in the step S205 and the damage localised in the step S211
S213 = selection of the external subsector identified in the step S205 and drawing of a new circumference localising the damage (graphical representation)
S214 = consistency check between the damage position estimated in S213 and the selected subsector
S215 = selection of the transducers surrounding the damage
S216 = consistency check for damage located in an external sector
S217 = virtual modification of the transducers' position
S218 = damage position map generation, showing the final damage spot
S219 = visualization of results

Advantageously, the device 1 and the method 100 described herein can be applied in various industrial fields such as aerospace, civil, marine and transport in general, as the device is miniaturised (low mass), flexible and with low cost. The device 1 contributes to the near-real-time structural integrity monitoring of engineering applications. The use of the device 1 reduces direct costs of planned maintenance and risks of structural failures.

Numerous additional modifications and variations may be made to the device 1 and the method 100 described above by a specialist in the art, in order to meet additional and contingent needs, all of which are within the scope of protection of the present invention as defined by the enclosed claims.

**Claims**

1. Device (1) for the detection and localization of a structural damage present on at least a portion of a structure to be checked (2), wherein the device(1) comprises:

a first element (3) applicable to the portion of the structure to be checked (2) and comprising a plurality of piezoelectric transducers ($5_1$, $5_2$, ... $5_n$) distributed on a surface of said first element (3); and
a second element (6) connectable to the first element (3) and comprising at least one microcontroller (7) to independently process the data received from each of the plurality of piezoelectric transducers ($5_1$, $5_2$, ... $5_n$), **characterized in that**:
the first element (3) is a flexible printed circuit to be removably applied to the portion of the structure to be checked (2) and comprises a plurality of seats ($4_1$, $4_2$, ... $4_n$), wherein each piezoelectric transducer ($5_1$, $5_2$, ... $5_n$) is insertable in a removable way inside a corresponding seat ($4_1$, $4_2$,... $4_n$).

2. Device (1) according to claim 1, wherein the seats ($4_1$, $4_2$, ... $4_n$) are arranged on a surface of the first element (3) so as to form a plurality of subgroups of seats ($8_1$, $8_2$, ... $8_n$), wherein in each subgroup the seats ($4_1$, $4_2$,... $4_n$) are distributed along a closed path, in particular at the vertices of a polygonal shape.

3. Device (1) according to claim 2, wherein
the closed paths defined by the arrangement of the seats ($4_1$, $4_2$, ... 4n) included in each subgroup are concentric with each other.

4. Device (1) according to claim 2 or 3, wherein
only a subgroup of the plurality of subgroups of seats ($8_1$, $8_2$, ... $8^n$) is configured to accommodate the piezoelectric transducers ($5_1$, $5_2$,... $5_n$).

5. Device (1) according to one of the preceding claims, wherein

   a. the first element (3) comprises at least five seats ($4_1$, $4_2$,...,$4_5$), wherein four seats ($4_2$,$4_3$,$4_4$,$4_5$) are arranged at the vertices of a square shape forming a subgroup of seats and the fifth seat ($4_1$) is arranged in the center of said square shape; and/or
   b. the first element (3) includes at least nine seats ($4_1$, $4_2$,...,$4_9$), wherein four seats ($4_2$,$4_3$,$4_4$,$4_5$) are arranged at the vertices of a first square shape forming a first subgroup of seats ($8_1$), other four seats ($4_6$,$4_7$,$4_8$,$4_9$) are arranged at the vertices of a second square shape forming a second subgroup of seats ($8_2$), and the fifth seat ($4_1$) is arranged in the center of the first and second square shape; and/or
   c. the first element (3) comprises at least thirteen seats($4_1$, $4_2$,...,$4_{13}$), wherein four seats ($4_2$,$4_3$,$4_4$,$4_5$) are arranged at the vertices of a first square shape forming a first subgroup of seats ($8_1$), other four seats ($4_6$,$4_7$,$4_8$,$4_9$) are arranged at the vertices of a second square shape forming a second subgroup of seats ($8_2$), other four seats ($4_{10}$,$4_{11}$,$4_{12}$,$4_{13}$) are arranged at the vertices of a third square shape forming a third subgroup of seats ($8_3$), and the fifth seat ($4_1$) is arranged in the center of the first, second, and third square shape.

6. Device (1) according to one of the preceding claims, wherein

   a. the microcontroller (7) of the second 5 element (6) is configured to process the data provided by the piezoelectric transducers ($5_1$, $5_2$,...,$5_n$) and calculate a damage index (9); and/or
   b. at least one seat of the plurality of seats ($4_1$, $4_2$,...,$4_n$) is a through hole; and/or
   c. each seat of the plurality of seats ($4_1$, $4_2$,...,$4_n$) is connected to a connection terminal (10) by means of a printed cable (11); and/or
   d. the surface of the first element (3) can be at least partially cut out to reduce the dimensions of the first element(3) on the basis of the arrangement of the piezoelectric transducers ($5_1$, $5_2$,...,$5_n$) on said surface; and/or
   e. the second element (6) comprises a low-energy Bluetooth device (29) for the transmission of data processed by the microcontroller (7) and for the activation and deactivation of the device (1) aimed at monitoring the structure to be checked (2).

7. Method (100) for the detection and localization of a structural damage present on at least a portion of a structure to be checked (2) by means of the device (1) according to any of the preceding claims, the method (100) comprising:

   inserting (S101) a plurality of piezoelectric transducers ($5_1$, $5_2$,...,$5_n$) inside a corresponding plurality of seats ($4_1$, $4_2$,...,$4_n$) present on a first element (3) of a device (1), wherein each piezoeletric transducer ($5_1$, $5_2$, ... $5_n$) is insertable in a removable way inside a corresponding seat ($4_1$, $4_2$, ... $4_n$);
   applying (S102) the first element (3) on the portion of the structure to be checked (2) so that the plurality of piezoelectric transducers ($5_1$, $5_2$,...,$5_n$) come into contact with said portion of the structure to be checked (2);
   acquiring (S103) an actual signal (12) and obtaining a corresponding actual data for each control path, wherein the control path is the path traveled by the actual signal between a signal source and at least one of the transducers of the plurality of piezoelectric transducers ($5_1$, $5_2$,...,$5_n$);
   comparing (S104) the actual data with a reference data obtained following the acquisition of a reference signal (13) which took place previously for each control path on the same structure to be checked (2); and determining (S105) a damage index (9) for each control path and defining a damage location map (14) to evaluate the presence, extent and location of a structural damage along, or in the vicinity of, said path following the comparison between the actual data and the reference data.

8. Method (100) according to claim 7, comprising:

generating elastic Lamb waves that travel inside the structure to be checked (2) by means of the plurality of piezoelectric transducers ($5_1$, $5_2$,...,$5_n$); and
automatically extracting the wave modes of the Lamb wave, in particular the group velocity of the symmetrical modes (S0) of the Lamb wave, to determine the damage index (9) and define the position map of the damage (14).

9. Method (100) according to one of claims 7 to 8, wherein

a. a first transducer ($5_1$) of the plurality of piezoelectric transducers ($5_1$, $5_2$,...,$5_n$) acts as a signal source and each of the remaining piezoelectric transducers ($5_2$,...,$5_n$) acts as a signal detector, and wherein each of the plurality of transducers ($5_1$, $5_2$,...,$5_n$) acting as a signal source generates in turn the same actual signal (12) which is subsequently received by all the remaining piezoelectric transducers ($5_2$,...,$5_n$) acting as signal detectors; or
b. an external source acts as a signal source and each of the piezoelectric transducers ($5_1$, $5_2$,...,$5_n$) acts as a signal detector.

10. Method (100) according to one of claims 7 to 9, comprising a first phase for determining the presence and a first position of the structural damage within a specific damage region (18) as a function of a geometric distribution of the plurality of piezoelectric transducers ($5_1$, $5_2$,...,$5_n$) in contact with the portion of the structure to be checked (2), wherein said first phase occurs if the value of at least one of the damage indices (9) determined for each control path is higher than a threshold value.

11. Method (100) according to claim 10, comprising a second phase following the first phase for determining a second location of the structural damage by applying a multi-stage approach to one or more pairs of piezoelectric transducers selected from the plurality of piezoelectric transducers ($5_1$, $5_2$,...,$5_n$) in contact with the portion of the structure to be checked (2) and to determine an estimated damage region (33) on the basis of the damage indices (9) and the pairs of piezoelectric transducers selected.

12. Method (100) according to one of claims 10 to 11, comprising a third phase for determining a mapping of the portion of the structure to be checked (2) and identifying the position of the structural damage on said portion, wherein the mapping takes place by taking into account one or more piezoelectric transducers ($5_1$, $5_2$,...,$5_n$) as a function of the damage region (18) identified, wherein the position of said piezoelectric transducers ($5_1$, $5_2$,...,$5_n$) is a virtual position as a function of the damage region (18).

13. Computer program product comprising instructions which, when the program is executed by a computer, cause the computer to carry out the steps of the method (100) according to one of claims 7 to 12.

**Patentansprüche**

1. Vorrichtung (1) zur Erkennung und Lokalisierung eines Schadens an einer Struktur, der an mindestens einem Teil einer zu prüfenden Struktur (2) vorliegt, wobei die Vorrichtung (1) Folgendes umfasst:

ein erstes Element (3), das auf den Teil der zu prüfenden Struktur (2) anwendbar ist und eine Vielzahl von piezoelektrischen Wandlern ($5_1$, $5_2$, ..., $5_n$) aufweist, die auf einer Oberfläche des ersten Elements (3) verteilt sind; und
ein zweites Element (6), das mit dem ersten Element (3) verbunden werden kann und mindestens einen Mikrocontroller (7) umfasst, der unabhängig die von jedem der piezoelektrischen Wandler ($5_1$, $5_2$, ...,$5_n$) empfangenen Daten verarbeitet, **dadurch gekennzeichnet, dass**:
das erste Element (3) eine flexible Leiterplatte ist, die abnehmbar an dem Teil der zu prüfenden Struktur (2) angewendet werden kann und eine Vielzahl von Aufnahmen ($4_1$, $4_2$, ..., $4_n$) umfasst, wobei jeder piezoelektrische Wandler ($5_1$, $5_2$, ..., $5_n$) abnehmbar innerhalb einer entsprechenden Aufnahme ($4_1$, $4_2$, ..., $4_n$) eingesetzt werden kann.

2. Vorrichtung (1) nach Anspruch 1, wobei die Aufnahmen ($4_1$, $4_2$, ..., $4_n$) auf einer Oberfläche des ersten Elements (3) so angeordnet sind, dass sie mehrere Untergruppen von Aufnahmen ($8_1$, $8_2$, ..., $8_n$) bilden, wobei in jeder Untergruppe die Aufnahmen ($4_1$, $4_2$, ..., $4_n$) entlang eines geschlossenen Pfades, insbesondere an den Eckpunkten einer polygonalen Form, verteilt sind.

3. Vorrichtung (1) nach Anspruch 2, wobei die durch die Anordnung der in jeder Untergruppe enthaltenen Aufnahmen ($4_1$, $4_2$, ..., $4_n$) definierten geschlossenen Pfade konzentrisch zueinander sind.

4. Vorrichtung (1) nach Anspruch 2 oder 3, wobei nur eine Untergruppe der Vielzahl von Untergruppen von Aufnahmen ($8_1$, $8_2$, $8_n$) zur Aufnahme der piezoelektrischen Wandler ($5_1$, $5_2$, ..., $5_n$) konfiguriert ist.

5. Vorrichtung (1) nach einem der vorhergehenden Ansprüche, wobei

    a. das erste Element (3) mindestens fünf Aufnahmen ($4_1$, $4_2$, ..., $4_5$) umfasst, wobei vier Aufnahmen ($4_2$, $4_3$, $4_4$, $4_5$) an den Eckpunkten einer quadratischen Form angeordnet sind, die eine Untergruppe von Aufnahmen bildet, und die fünfte Aufnahme ($4_1$) in der Mitte dieser quadratischen Form angeordnet ist; und/oder
    b. das erste Element (3) mindestens neun Aufnahmen ($4_1$, $4_2$, ..., $4_9$) umfasst, wobei vier Aufnahmen ($4_2$, $4_3$, $4_4$, $4_5$) an den Eckpunkten einer ersten quadratischen Form angeordnet sind, die eine erste Untergruppe von Aufnahmen ($8_1$) bildet, vier weitere Aufnahmen ($4_6$, $4_7$, $4_8$, $4_9$) an den Eckpunkten einer zweiten quadratischen Form angeordnet sind, die eine zweite Untergruppe von Aufnahmen ($8_2$) bildet, und die fünfte Aufnahme ($4_1$) in der Mitte der ersten und zweiten quadratischen Form angeordnet ist; und/oder
    c. das erste Element (3) mindestens dreizehn Aufnahmen ($4_1$, $4_2$, ..., $4_{13}$), umfasst, wobei vier Aufnahmen ($4_2$, $4_3$, $4_4$, $4_5$) an den Eckpunkten einer ersten quadratischen Form angeordnet sind und eine erste Untergruppe von Aufnahmen ($8_1$) bilden, weitere vier Aufnahmen ($4_6$, $4_7$, $4_8$, $4_9$) an den Eckpunkten einer zweiten quadratischen Form angeordnet sind und eine zweite Untergruppe von Aufnahmen ($8_2$) bilden, weitere vier Aufnahmen ($4_{10}$, $4_{11}$, $4_{12}$, $4_{13}$) an den Eckpunkten einer dritten quadratischen Form angeordnet sind und eine dritte Untergruppe von Aufnahmen ($8_3$) bilden, und die fünfte Aufnahme ($4_1$) in der Mitte der ersten, zweiten und dritten quadratischen Form angeordnet ist.

6. Vorrichtung (1) nach einem der vorhergehenden Ansprüche, wobei

    a. der Mikrocontroller (7) des zweiten 5 Elements (6) so konfiguriert ist, dass er die von den piezoelektrischen Wandlern ($5_1$, $5_2$, ..., $5_n$) gelieferten Daten verarbeitet und einen Schadensindex (9) berechnet; und/oder
    b. mindestens eine Aufnahme der mehreren Aufnahmen ($4_1$, $4_2$, ..., $4_n$) eine Durchgangsbohrung ist; und/oder
    c. jede Aufnahme der mehreren Aufnahmen ($4_1$, $4_2$, ..., $4_n$) mittels eines gedruckten Kabels (11) mit einem Verbindungsanschluss (10) verbunden ist; und/oder
    d. die Oberfläche des ersten Elements (3) zumindest teilweise ausgeschnitten werden kann, um die Abmessungen des ersten Elements (3) basierend auf der Anordnung der piezoelektrischen Wandler ($5_1$, $5_2$, ..., $5_n$) auf dieser Oberfläche zu reduzieren; und/oder
    e. das zweite Element (6) ein Bluetooth-Gerät mit niedrigem Energieverbrauch (29) zur Übertragung der vom Mikrocontroller (7) verarbeiteten Daten sowie zur Aktivierung und Deaktivierung der Vorrichtung (1) zur Überwachung der zu prüfenden Struktur (2) umfasst.

7. Verfahren (100) zur Erkennung und Lokalisierung eines Strukturschadens, der an mindestens einem Teil der zu prüfenden Struktur (2) vorliegt, mittels der Vorrichtung (1) nach einem der vorhergehenden Ansprüche, wobei das Verfahren (100) Folgendes umfasst:

    Einsetzen (S101) mehrerer piezoelektrischer Wandler ($5_1$, $5_2$, ..., $5_n$) in eine entsprechende Anzahl von Aufnahmen ($4_1$, $4_2$, ..., $4_n$) auf einem ersten Element (3) einer Vorrichtung (1), wobei jeder piezoelektrische Wandler ($5_1$, $5_2$, ..., $5_n$) herausnehmbar in eine entsprechende Aufnahme ($4_1$, $4_2$, ..., $4_n$) eingesetzt werden kann;
    Anwenden (S102) des ersten Elements (3) auf den Teil der zu prüfenden Struktur (2) so dass die Vielzahl piezoelektrischer Wandler ($5_1$, $5_2$, ..., $5_n$) mit dem Teil der zu prüfenden Struktur (2) in Kontakt kommt;
    Erfassen (S103) eines Ist-Signals (12) und Erhalten entsprechender Ist-Daten für jeden Steuerpfad, wobei der Steuerpfad der Pfad ist, den das Ist-Signal zwischen einer Signalquelle und mindestens einem der Wandler der Vielzahl piezoelektrischer Wandler ($5_1$, $5_2$, ..., $5_n$) zurücklegt;
    Vergleichen (S104) der Ist-Daten mit Referenzdaten, die nach der Erfassung eines Referenzsignals (13) erhalten wurden, die zuvor für jeden Steuerpfad auf derselben zu prüfenden Struktur (2) erfolgte; und
    Bestimmung (S105) eines Schadensindex (9) für jeden Kontrollpfad und Definition einer Schadensstandortkarte (14) zur Bewertung des Vorhandenseins, des Ausmaßes und des Standorts eines Strukturschadens entlang oder in der Nähe des genannten Pfades nach dem Vergleich zwischen den Ist-Daten und den Referenzdaten.

8.  Verfahren (100) nach Anspruch 7, umfassend:

    Erzeugen elastischer Lamb-Wellen, die sich innerhalb der zu prüfenden Struktur (2) mittels der Vielzahl piezo-elektrischer Wandler ($5_1$, $5_2$, ..., $5_n$) ausbreiten; und
    automatisches Extrahieren der Wellenmoden der Lamb-Welle, insbesondere der Gruppengeschwindigkeit der symmetrischen Moden (S0) der Lamb-Welle, zur Bestimmung des Schadensindex (9) und zur Definition der Schadensortkarte (14).

9.  Verfahren (100) nach einem der Ansprüche 7 oder 8, wobei

    a. ein erster Wandler ($5_1$) aus der Vielzahl piezoelektrischer Wandler ($5_1$, $5_2$, ..., $5_n$) als Signalquelle dient, und jeder der übrigen piezoelektrischen Wandler ($5_2$, ..., $5_n$) als Signalempfänger dient, und wobei jeder der als Signalquelle dienenden Wandler ($5_1$, $5_2$, ..., $5_n$) nacheinander dasselbe IST-Signal (12) erzeugt, das anschließend von allen übrigen als Signaldetektoren dienenden piezoelektrischen Wandlern ($5_2$, ..., $5_n$) empfangen wird; oder
    b. eine externe Quelle als Signalquelle dient und jeder der piezoelektrischen Wandler ($5_1$, $5_2$, ..., $5_n$) als Signaldetektor dient.

10. Verfahren (100) nach einem der Ansprüche 7 bis 9, umfassend eine erste Phase zur Bestimmung des Vorhandenseins und einer ersten Position des Strukturschadens innerhalb eines bestimmten Schadensbereichs (18) in Abhängigkeit von der geometrischen Verteilung der Vielzahl von piezoelektrischen Wandlern ($5_1$, $5_2$, ..., $5_n$), die mit dem Teil der zu prüfenden Struktur (2) in Kontakt stehen, wobei diese erste Phase eintritt, wenn der Wert mindestens eines der für jeden Kontrollpfad ermittelten Schadensindizes (9) einen Schwellenwert überschreitet.

11. Verfahren (100) nach Anspruch 10, umfassend eine zweite Phase im Anschluss an die erste Phase zur Bestimmung einer zweiten Position des Strukturschadens durch Anwendung eines mehrstufigen Verfahrens auf ein oder mehrere Paare von piezoelektrischen Wandlern, die aus der Vielzahl der piezoelektrischen Wandler ($5_1$, $5_2$, ..., $5_n$) ausgewählt sind und mit dem Teil der zu prüfenden Struktur (2) in Kontakt stehen, und zur Bestimmung eines geschätzten Schadensbereichs (33) auf Grundlage der Schadensindizes (9) und der ausgewählten Paare von piezoelektrischen Wandlern.

12. Verfahren (100) nach einem der Ansprüche 10 bis 11, umfassend eine dritte Phase zur Bestimmung einer Kartierung des Teils der zu prüfenden Struktur (2) und zur Identifizierung der Position des Strukturschadens auf diesem Teil, wobei die Kartierung unter Berücksichtigung eines oder mehrerer piezoelektrischer Wandler ($5_1$, $5_2$, ..., $5_n$) in Abhängigkeit von dem identifizierten Schadensbereich (18) erfolgt, wobei die Position der piezoelektrischen Wandler ($5_1$, $5_2$, ..., $5_n$) eine virtuelle Position in Abhängigkeit vom Schadensbereich (18) ist.

13. Computerprogrammprodukt, umfassend Anweisungen, die, wenn das Programm von einem Computer ausgeführt wird, den Computer veranlassen, die Schritte des Verfahrens (100) nach einem der Ansprüche 7 bis 12 auszuführen.

**Revendications**

1.  Dispositif (1) pour la détection et la localisation d'un dommage structurel présent sur au moins une portion d'une structure à vérifier (2), dans lequel le dispositif (1) comprend :

    un premier élément (3) applicable à la portion de la structure à vérifier (2) et comprenant une pluralité de transducteurs piézoélectriques ($5_1$, $5_2$, ..., $5_n$) distribués sur une surface dudit premier élément (3) ; et
    un deuxième élément (6) connectable au premier élément (3) et comprenant au moins un microcontrôleur (7) servant à traiter indépendamment les données reçues de chaque transducteur de la pluralité de transducteurs piézoélectriques ($5_1$, $5_2$, ..., $5_n$), **caractérisé en ce que** :
    le premier élément (3) est un circuit imprimé flexible à appliquer de manière amovible sur la portion de la structure à vérifier (2) et comprend une pluralité de sièges ($4_1$, $4_2$, ..., $4_n$), dans lequel chaque transducteur piézoélectrique ($5_1$, $5_2$, ..., $5_n$) est insérable de manière amovible à l'intérieur d'un siège correspondant ($4_1$, $4_2$, ..., $4_n$).

2.  Dispositif (1) selon la revendication 1, dans lequel les sièges ($4_1$, $4_2$, ..., $4_n$) sont agencés sur une surface du premier élément (3) de manière à former une pluralité de sous-groupes de sièges ($8_1$, $8_2$, ..., $8_n$), dans lequel, dans chaque sous-groupe, les sièges ($4_1$, $4_2$, ..., $4_n$) sont distribués le long d'un chemin fermé, en particulier aux sommets d'une forme polygonale.

3.  Dispositif (1) selon la revendication 2, dans lequel les chemins fermés définis par l'agencement des sièges ($4_1$, $4_2$, ..., $4_n$) inclus dans chaque sous-groupe sont concentriques.

4.  Dispositif (1) selon la revendication 2 ou 3, dans lequel un seul sous-groupe de la pluralité de sous-groupes de sièges ($8_1$, $8_2$, ..., $8_n$) est configuré pour recevoir les transducteurs piézoélectriques ($5_1$, $5_2$, ..., $5_n$).

5.  Dispositif (1) selon l'une des revendications précédentes, dans lequel

    a. le premier élément (3) comprend au moins cinq sièges ($4_1$, $4_2$, ..., $4_5$), dans lequel quatre sièges ($4_2$, $4_3$, $4_4$, $4_5$) sont agencés aux sommets d'une forme carrée constituant un sous-groupe de sièges et le cinquième siège ($4_1$) est agencé au centre de ladite forme carrée ; et/ou
    b. le premier élément (3) comprend au moins neuf sièges ($4_1$, $4_2$, ..., $4_9$), dans lequel quatre sièges ($4_2$, $4_3$, $4_4$, $4_5$) sont agencés aux sommets d'une première forme carrée constituant un premier sous-groupe de sièges ($8_1$), quatre autres sièges ($4_6$, $4_7$, $4_8$, $4_9$) sont agencés aux sommets d'une deuxième forme carrée constituant un deuxième sous-groupe de sièges ($8_2$), et le cinquième siège ($4_1$) est agencé au centre des première et deuxième formes carrées ; et/ou
    c. le premier élément (3) comprend au moins treize sièges ($4_1$, $4_2$, ..., $4_{13}$), dans lequel quatre sièges ($4_2$, $4_3$, $4_4$, $4_5$) sont agencés aux sommets d'une première forme carrée constituant un premier sous-groupe de sièges ($8_1$), quatre autres sièges ($4_6$, $4_7$, $4_8$, $4_9$) sont agencés aux sommets d'une deuxième forme carrée constituant un deuxième sous-groupe de sièges ($8_2$), quatre autres sièges ($4_{10}$, $4_{11}$, $4_{12}$, $4_{13}$) sont agencés aux sommets d'une troisième forme carrée constituant un troisième sous-groupe de sièges ($8_3$), et le cinquième siège ($4_1$) est agencé au centre des première, deuxième et troisième formes carrées.

6.  Dispositif (1) selon l'une des revendications précédentes, dans lequel

    a. le microcontrôleur (7) du deuxième élément (6) est configuré pour traiter les données fournies par les transducteurs piézoélectriques ($5_1$, $5_2$, ..., $5_n$) et pour calculer un indice de dommage (9) ; et/ou
    b. au moins un siège de la pluralité de sièges ($4_1$, $4_2$, ..., $4_n$) est un trou traversant ; et/ou
    c. chaque siège de la pluralité de sièges ($4_1$, $4_2$, ..., $4_n$) est connecté à une borne de connexion (10) au moyen d'un câble imprimé (11) ; et/ou
    d. la surface du premier élément (3) peut être au moins partiellement découpée pour réduire les dimensions du premier élément (3) sur la base de l'agencement des transducteurs piézoélectriques ($5_1$, $5_2$, ..., $5_n$) sur ladite surface ; et/ou
    e. le deuxième élément (6) comprend un dispositif Bluetooth à basse consommation (29) pour la transmission des données traitées par le microcontrôleur (7) et pour l'activation et la désactivation du dispositif (1) destiné à surveiller la structure à vérifier (2).

7.  Procédé (100) de détection et de localisation d'un dommage structurel présent sur au moins une portion d'une structure à vérifier (2) au moyen du dispositif (1) selon l'une quelconque des revendications précédentes, le procédé (100) comprenant :

    l'insertion (S101) d'une pluralité de transducteurs piézoélectriques ($5_1$, $5_2$, ..., $5_n$) à l'intérieur d'une pluralité correspondante de sièges ($4_1$, $4_2$, ..., $4_n$) présents sur un premier élément (3) d'un dispositif (1), dans lequel chaque transducteur piézoélectrique ($5_1$, $5_2$, ..., $5_n$) peut être inséré de manière amovible à l'intérieur d'un siège correspondant ($4_1$, $4_2$, ..., $4_n$) ;
    l'application (S102) du premier élément (3) sur la portion de la structure à vérifier (2) de sorte que la pluralité de transducteurs piézoélectriques ($5_1$, $5_2$, ..., $5_n$) entre en contact avec ladite portion de la structure à vérifier (2) ;
    l'acquisition (S103) d'un signal réel (12) et l'obtention de données réelles correspondantes pour chaque chemin de contrôle, dans lequel le chemin de contrôle est le chemin parcouru par le signal réel entre une source de signal et au moins un transducteur de la pluralité de transducteurs piézoélectriques ($5_1$, $5_2$, ..., $5_n$) ;
    la comparaison (S104) des données réelles à des données de référence obtenues suite à l'acquisition d'un signal de référence (13) qui a eu lieu précédemment pour chaque chemin de contrôle sur la structure même à vérifier (2) ; et

la détermination (S105) d'un indice de dommage (9) pour chaque chemin de contrôle et la définition d'une carte de localisation de dommage (14) pour évaluer la présence, l'étendue et l'emplacement d'un dommage structurel le long ou à proximité dudit chemin, suite à la comparaison entre les données réelles et les données de référence.

8. Procédé (100) selon la revendication 7, comprenant :

la génération d'ondes élastiques de Lamb qui se propagent à l'intérieur de la structure à vérifier (2) au moyen de la pluralité de transducteurs piézoélectriques ($5_1$, $5_2$, ..., $5_n$) ; et
l'extraction automatique des modes d'onde de l'onde de Lamb, en particulier de la vitesse de groupe des modes symétriques (S0) de l'onde de Lamb, pour déterminer l'indice de dommage (9) et définir la carte de localisation du dommage (14).

9. Procédé (100) selon l'une des revendications 7 à 8, dans lequel

a. un premier transducteur ($5_1$) de la pluralité de transducteurs piézoélectriques ($5_1$, $5_2$, ..., $5_n$) agit comme une source de signal et chacun des transducteurs piézoélectriques restants ($5_2$, ..., $5_n$) agit comme un détecteur de signal, et dans lequel chaque transducteur de la pluralité de transducteurs ($5_1$, $5_2$, ..., $5_n$) agissant comme une source de signal génère à son tour le même signal réel (12), qui est ensuite reçu par tous les transducteurs piézoélectriques restants ($5_2$, ..., $5_n$) agissant comme des détecteurs de signaux ; ou
b. une source externe agit comme une source de signal et chacun des transducteurs piézoélectriques ($5_1$, $5_2$, ..., $5_n$) agit comme détecteur de signal.

10. Procédé (100) selon l'une des revendications 7 à 9, comprenant une première phase pour déterminer la présence et une première position du dommage structurel dans une région de dommage spécifique (18) en fonction d'une distribution géométrique de la pluralité de transducteurs piézoélectriques ($5_1$, $5_2$, ..., $5_n$) en contact avec la portion de la structure à vérifier (2), dans lequel ladite première phase se produit si la valeur d'au moins l'un des indices de dommage (9) déterminés pour chaque chemin de contrôle est supérieure à une valeur seuil.

11. Procédé (100) selon la revendication 10, comprenant une deuxième phase qui suit la première phase pour déterminer un deuxième emplacement du dommage structurel en appliquant une approche multi-étapes à une ou plusieurs paires de transducteurs piézoélectriques sélectionnés parmi la pluralité de transducteurs piézoélectriques ($5_1$, $5_2$, ..., $5_n$) en contact avec la portion de la structure à vérifier (2) et pour déterminer une région de dommage estimée (33) sur la base des indices de dommage (9) et des paires de transducteurs piézoélectriques sélectionnés.

12. Procédé (100) selon l'une des revendications 10 et 11, comprenant une troisième phase pour déterminer une cartographie de la portion de la structure à vérifier (2) et identifier la position du dommage structurel sur ladite portion, dans lequel la cartographie s'effectue en prenant en compte un ou plusieurs transducteurs piézoélectriques ($5_1$, $5_2$, ..., $5_n$) en fonction de la région de dommage (18) identifiée, dans lequel la position desdits transducteurs piézoélectriques ($5_1$, $5_2$, ..., $5_n$) est une position virtuelle en fonction de la région de dommage (18).

13. Produit logiciel comprenant des instructions qui, quand le logiciel est exécuté par un ordinateur, commandent à l'ordinateur de mettre en œuvre les étapes d'un procédé (100) selon l'une des revendications 7 à 12.

FIG. 1B

FIG. 1A

FIG. 2A

FIG. 2B

EP 4 540 588 B1

FIG. 3

EP 4 540 588 B1

FIG. 4A

FIG. 4B

200

FIG. 5

FIG. 6B

FIG. 6A

FIG. 7A

FIG. 7B

FIG. 7C

FIG. 7D

FIG. 8B

FIG. 8A

FIG. 9A

FIG. 9B

FIG. 9C

FIG. 9D

EP 4 540 588 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2006154398 A1
- US 6252334 B1
- US 2005061076 A1
- US 2011040496 A1